# EUROPÄISCHE PATENTSCHRIFT

(11) **EP 3 440 735 B1**
(45) Veröffentlichungstag und Bekanntmachung des Hinweises auf die Patenterteilung: **12.02.2020**
(21) Anmeldenummer: 16718612.1
(22) Anmeldetag: 07.04.2016
(51) Int. Cl.: H01Q 1/22, H01Q 1/02, H01Q 1/42, H01Q 1/00, G01F 23/284, G01S 7/02, G01B 15/04

(54) **RADARANTENNENEINRICHTUNG SOWIE VERFAHREN ZUR ABSCHIRMUNG EINER RADARANTENNENEINRICHTUNG**
RADAR ANTENNA DEVICE AND METHOD FOR SHIELDING A RADAR ANTENNA DEVICE
DISPOSITIF D'ANTENNE DE RADAR AINSI QUE PROCÉDÉ DE PROTECTION D'UN DISPOSITIF D'ANTENNE DE RADAR

(43) Veröffentlichungstag der Anmeldung: 13.02.2019
(73) Patentinhaber: TMT Tapping-Measuring-Technology GmbH, 57072 Siegen (DE)
(72) Erfinder: STUMPER, Jean-François, 5740 Filsdorf (LU); VIKTOR, Kevin, 9142 Bürden (LU)
(74) Vertreter: advotec.
(86) Internationale Anmeldenummer: PCT/EP2016/057579
(87) Internationale Veröffentlichungsnummer: WO 2017/174135

(56) Entgegenhaltungen:
- WO-A1-2015/107195
- GB-A- 2 039 365
- US-A- 5 043 735
- US-A1- 2011 193 274
- US-A1- 2014 047 917

## Beschreibung

Die vorliegende Erfindung betrifft eine Radarantenneneinrichtung mit einer in einem Gehäuse aufgenommenen Antennenanordnung, die zur Abtrennung gegenüber einer in einem Ofenraum ausgebildeten Ofenatmosphäre mit einer am Gehäuse angeordneten radartransparenten Schutzplatte versehen ist. Des Weiteren betrifft die Erfindung ein Verfahren zur Abschirmung einer Radarstrahlung emittierenden Radarantenneneinrichtung umfassend eine in einem Gehäuse angeordnete Antenneneinrichtung, die zur Abtrennung gegenüber einer in einem Ofenraum ausgebildeten Ofenatmosphäre mit einer am Gehäuse angeordneten radartransparenten Schutzplatte versehen ist.

Radarantenneneinrichtungen der eingangs genannten Art sind in einem Ofenraum angeordnet und werden zur Bestimmung der Topographie der Mölleroberfläche in einem Schachtofen verwendet. Hierzu wird die Mölleroberfläche mit einer von Antennen einer Antennenanordnung emittierten Radarstrahlung beaufschlagt. Zum Schutz der Antennenanordnung gegenüber der Ofenatmosphäre ist eine die Antennenanordnung gegenüber der Ofenatmosphäre abtrennende radartransparente Schutzplatte vorgesehen, so dass insbesondere der in der Ofenatmosphäre enthaltene Staub nicht auf die Antennenanordnung gelangt. In Verbindung mit der in der Ofenatmosphäre enthaltenen Feuchte bildet sich auf der Plattenoberfläche eine Ablagerung aus, die die zum bestimmungsgemäßen Betrieb der Radarantenneneinrichtung notwendige Radartransparenz der Schutzplatte reduziert, so dass eine regelmäßige Säuberung der Schutzplatte notwendig ist, um eine zuverlässige Bestimmung der Topographie der Mölleroberfläche durchführen zu können.

Aus der WO 2010/144936 A1 ist eine Radarantenneneinrichtung bekannt, bei der zur Reinigung einer der Antennenanordnung vorgeordneten Schutzplatte eine auf die Oberfläche der Schutzplatte ausgerichtete Spüldüse vorgesehen ist, mittels der kontinuierlich ein Spülfluid gegen die Plattenoberfläche gesprüht wird. Mittels der aus der WO 2010/144936 A1 bekannten Spülung der Schutzplatte lässt sich zwar immer wieder eine Reinigung der Plattenoberfläche durchführen, wobei jedoch festzustellen ist, dass es im Laufe eines längeren Betriebs der Radarantenneneinrichtung trotz kontinuierlicher Spülung der Plattenoberfläche zu einer zunehmenden Eintrübung der Schutzplatte kommt, so dass letztendlich der Austausch der Schutzplatte notwendig wird.

Der vorliegenden Erfindung liegt die Aufgabe zugrunde, eine Radarantenneneinrichtung bzw. ein Verfahren zur Abschirmung einer Radarantenneneinrichtung vorzuschlagen, das eine verlängerte Standzeit der die Antennenanordnung gegenüber der Ofenatmosphäre abtrennenden Schutzplatte ermöglicht.

Zur Lösung dieser Aufgabe weist die erfindungsgemäße Radarantrenneneinrichtung die Merkmale des Anspruchs 1 auf.

Erfindungsgemäß ist der Schutzplatte mit Abstand eine mit Poren versehene radartransparente biegeschlaffe Materiallage als Abschirmung vorgeordnet, derart, dass ein gegenüber dem Ofenraum durch die Materiallage abgetrennter Zwischenraum gebildet ist, in den eine Fluidleitung zur Beaufschlagung der Materiallage mit einer Fluidströmung einmündet.

Die erfindungsgemäße Radarantenneneinrichtung verhindert aufgrund der der Schutzplatte als Abschirmung vorgeordneten Materiallage eine unmittelbare Beaufschlagung der Schutzplatte mit in der Ofenatmosphäre enthaltenem Staub. Vielmehr lagert sich der aus der Ofenatmosphäre stammende Staub an der Oberfläche der Materiallage ab. Der zwischen der Materiallage und der Schutzplatte ausgebildete Zwischenraum kann über die in den Zwischenraum einmündende Fluidleitung mit einem unter Druck stehenden Fluid, insbesondere Stickstoff, beaufschlagt werden, derart, dass der Stickstoff durch die Poren der Materiallage in den Ofenraum entweicht und dabei aufgrund des durch die Materiallage gebildeten Strömungswiderstands die Materiallage in Schwingungen versetzt. Aufgrund der von der Materiallage ausgeführten Schwingungen und der Durchströmung der in der Materiallage ausgebildeten Poren wird ein auf der Materiallage abgelagerter Staub abgeschüttelt bzw. von der Materiallage abgeblasen.

Im Unterschied zu der bekannten Vorrichtung, bei der eine unmittelbare Beaufschlagung der Schutzplatte mit einem Spülfluid erfolgt, ermöglicht die erfindungsgemäße Radarantenneneinrichtung einerseits, dass sich aufgrund der vorgeordneten Materiallage erst gar kein Staub oder ggf. nur in einem wesentlich geringeren Ausmaß Staub auf der Schutzplatte ablagert, und andererseits, dass der stattdessen auf der Materiallage abgelagerte Staub von dieser entfernt wird. Die somit in jedem Fall zumindest stark reduzierte Staubbelastung der Schutzplatte ermöglicht insgesamt eine erhöhte Standzeit der Schutzplatte.

Vorzugsweise ist die Materiallage elastisch ausgebildet, so dass hierdurch die Ausbildung von Schwingungen der Materiallage noch unterstützt wird. Eine elastische Ausgestaltung der Materiallage ist jedoch keine Voraussetzung für die Erzeugung von Schwingungen der Materiallage. Die Ausbildung von Schwingungen kann auch bereits dadurch gefördert werden, dass die biegeschlaffe Materiallage ohne Vorspannung, also insbesondere mit Durchhang am Gehäuse angeordnet ist, so dass ein Flattern der Materiallage infolge der Druckbeaufschlagung durch die Fluidströmung ermöglicht wird.

Besonders vorteilhaft ist es, wenn die Materiallage eine Gewebestruktur aufweist, also etwa als Tuch ausgebildet ist, so dass über das Gewebedesign die Ausbildung einer definierten konstanten Porenweite in der Materiallage möglich ist.

Wenn das Gewebe darüber hinaus zumindest anteilig elastische Längsfäden oder Querfäden aufweist, lässt sich auch die gewünschte Elastizität der Gewebestruktur definiert einstellen.

Hierzu können die Längsfäden oder Querfäden mit einer elastischen Umhüllung versehen sein, insbesondere aus einem Material oder in einer Materialstärke, die die gewünschten elastischen Eigenschaften ermöglicht.

Alternativ ist es möglich, dass die Längsfäden oder Querfäden mit einem elastischen Material imprägniert sind.

Vorteilhaft ist es auch, wenn die Fluidleitung zumindest anteilig in einer Gehäusewandung des Gehäuses ausgebildet ist, so dass die Einleitung der Fluidströmung in den Zwischenraum ohne zusätzliche Installationen möglich ist.

Wenn die Fluidleitung zumindest bereichsweise mit einer Heizeinrichtung versehen ist, kann eine Kondensation der in der Ofenatmosphäre enthaltenen Feuchtigkeit an der Materiallage und damit die Möglichkeit der Ausbildung einer feuchten Staubschicht an der Materiallage verhindert werden.

Das erfindungsgemäße Verfahren weist die Merkmale des Anspruchs 9 auf.

Erfindungsgemäß ist der Schutzplatte zur Abschirmung eine mit Poren versehene radartransparente biegeschlaffe Materiallage vorgeordnet, derart, dass von der Schutzplatte und der Materiallage ein gegenüber dem Ofenraum abgetrennter Zwischenraum ausgebildet wird, und die Materiallage wird mittels einer in den Zwischenraum einmündenden Fluidleitung zur Erzeugung von Schwingungen der Materiallage mit einer die Poren der Materiallage durchdringenden Fluidströmung beaufschlagt.

Vorzugsweise erfolgt die Beaufschlagung der Materiallage mit einer Stickstoffströmung.

Besonders vorzugsweise wird die Fluidströmung beheizt.

Wenn die Strömungsbeaufschlagung zur Ausbildung eines zeitabhängigen Beaufschlagungsprofils mit wechselndem Druck erfolgt, kann eine Abstimmung zwischen dem Beaufschlagungsprofil und der Schwingungsfrequenz der Materiallage erfolgen, derart, dass besonders große Resonanzamplituden der Schwingungen der Materiallage ausgelöst werden.

Eine besonders gute Abstimmung zwischen dem Beaufschlagungsprofil und dem Schwingungsverhalten der Materiallage zur Erzeugung von Resonanzschwingungen wird möglich, wenn eine Abstimmung der Materiallage in ihrem Aufbau und/oder ihrer Elastizität auf das Beaufschlagungsprofil erfolgt.

Nachfolgend wird eine bevorzugte Ausführungsform der Radarantenneneinrichtung anhand der Zeichnungen näher erläutert.

Es zeigen:
- **Fig. 1**: eine in einem Ofenraum eines Schachtofens angeordnete Radareinrichtung;
- **Fig. 2**: eine vergrößerte Schnittdarstellung der in **Fig. 1** gezeig-ten Radareinrichtung mit einer vor einer Schutzplatte an-geordneten Materiallage;
- **Fig. 3**: eine vergrößerte Teildarstellung der Materiallage gemäß Ansicht X in **Fig. 2** ohne Strömungsbeaufschlagung;
- **Fig. 4**: die in **Fig. 3** darstellte Materiallage mit Strömungsbeauf-schlagung.

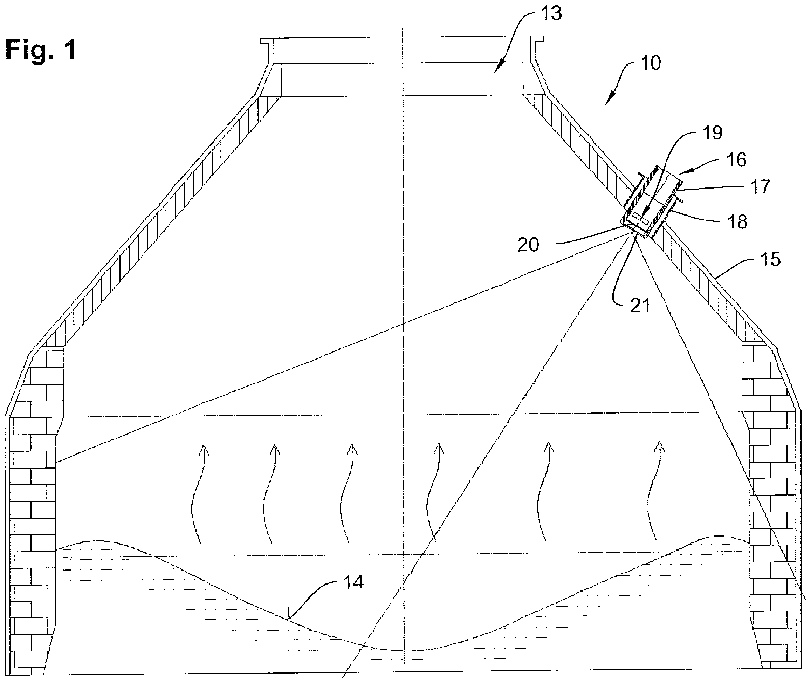

**Fig. 1** zeigt einen Oberofen 10 eines Schachtofens mit einer mittels eines hier nicht näher dargestellten Deckels verschließbaren Ofenöffnung 13, durch die die Beschickung des Schachtofens mit in **Fig. 1** im Einzelnen nicht näher dargestellten Koks- und Möllerschichten erfolgt. In einem Ofenunterteil 12 ist eine Mölleroberfläche 14 ausgebildet, oberhalb der eine zur Ofenöffnung 13 hin aufsteigende heiße Gase enthaltende Atmosphäre ausgebildet ist. Die Atmosphäre ist aufgrund der Beschickung des Ofens stark mit Staub belastet.

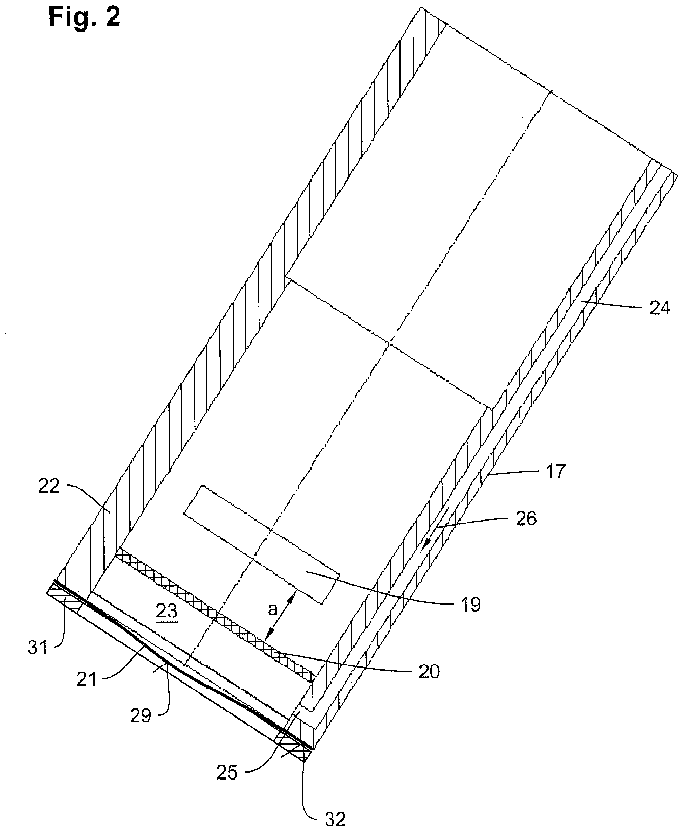

Zur Erfassung der in **Fig. 1** dargestellten Mölleroberfläche 14 ist in einer Ofenwandung 15 des Oberofens 10 eine Radarantenneneinrichtung 16 angeordnet, die in einem Gehäuse 17, das in einer die Ofenwandung 15 durchdringenden Gehäuseaufnahme 18 angeordnet ist, eine Antennenanordnung 19 aufweist. Die Antennenanordnung 19 ist zur Ofenatmosphäre hin mit einer radartransparenten Schutzplatte 20 abgedeckt, die im vorliegenden Fall eine frontseitige Gehäusewandung ausbildet. Wie in **Fig. 2** dargestellt, ist das Gehäuse 17 mit einer in einem Abstand a in Richtung auf die Ofenatmosphäre angeordneten, als biegeschlaffe Materiallage 21 ausgeführten Abschirmeinrichtung versehen, die an ihrer Peripherie mit einer Gehäusewandung 22 verbunden ist, derart, dass zwischen der Materiallage 21 und der Schutzplatte 20 ein allseitig begrenzter Zwischenraum 23 ausgebildet ist.

Die biegeschlaffe Materiallage 21 ist im vorliegenden Fall als Tuch ausgebildet, wobei das Materiallage 21 mittels eines Flanschrings 31 an einem stirnseitigen Rand 32 des Gehäuses 17 befestigt ist.

Wie **Fig. 2** weiter zeigt, weist die Gehäusewandung 22 eine hier als sich in Längsrichtung des Gehäuses 17 innerhalb der Gehäusewand 22 erstreckende Bohrung ausgeführte Fluidleitung 24 auf, die mit einer Austrittsöffnung 25 in den Zwischenraum 23 einmündet. Die Fluidleitung 24 ermöglicht eine Einleitung einer im vorliegenden Fall als Stickstoffströmung ausgebildete Fluidströmung 26 von außerhalb des Schachtofens 10 in den Zwischenraum 23.

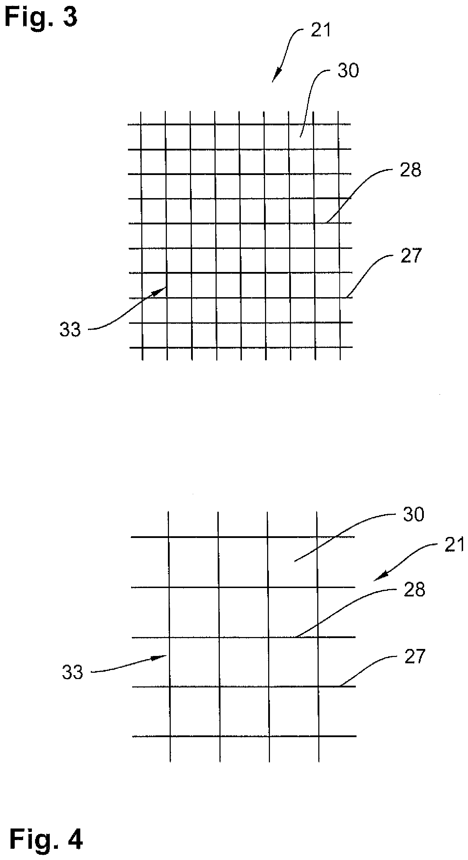

Vorzugsweise in einem Bereich außerhalb des Schachtofens ist eine hier nicht näher dargestellte Fluidzuleitung vorgesehen mit einer Ventileinrichtung, die die Einstellung einer definierten Fluidströmung 26 ermöglicht, wobei vorzugsweise sowohl der Druck und der Volumenstrom der Fluidströmung 26 als auch ein definierter zeitabhängiger Druckverlauf der Fluidströmung 26 vorgegeben werden können. Mittels der Ventileinrichtung kann eine sich in Abhängigkeit von der Zeit ändernde Druckbeaufschlagung der Materiallage 21, also beispielsweise die Beaufschlagung mit Druckimpulsen definierter Höhe im Sekundentakt, erfolgen. In Abhängigkeit von den Druckimpulsen erfolgt eine pulsierende Aufweitung der Durchströmungsquerschnitte von Poren 30 (**Fig. 3 und 4**) der Materiallage 21, wodurch die Materiallage 21 in Schwingung versetzt wird. Die Schwingungen können insbesondere bei einer schlaffen, also einen Durchhang aufweisende Anordnung der Materiallage 21 am Gehäuse 17 mit einem Flattern der Materiallage 21 überlagert werden. Auch ist es möglich, eine Materiallage 21, die eine zur Ausbildung einer Schwingungsamplitude ausreichende Elastizität aufweist, mit Vorspannung am Gehäuse 17 anzuordnen.

In den **Fig. 3** und **4** ist eine vergrößerte Aufsicht auf die Materiallage 21 dargestellt, wobei die Materiallage 21 im vorliegenden Fall eine Gewebestruktur 33 aufweist mit einander kreuzenden Längsfäden 27 und Querfäden 28, die die Poren 30 begrenzen und somit den Durchströmungsquerschnitt der Poren 30 definieren. Im vorliegenden Fall sind sowohl die Längsfäden 27 als auch die Querfäden 28 mit einer elastischen Umhüllung versehen. Beispielsweise können die Längsfäden 27 und die Querfäden 28 aus Glasfaser bestehen, die zur Ausbildung der Umhüllung mit Teflon ummantelt sind.

**Fig. 3** zeigt die Materiallage 21 ohne Druckbeaufschlagung. In **Fig. 4** ist die Materiallage 21 mit infolge einer Druckbeaufschlagung geweiteten Poren 30 dargestellt. Im Vergleich hierzu sind die Poren 30 bei einem Druckabfall entsprechend kleiner ausgebildet, so dass bei einer elastisch ausgebildeten Materiallage 21 nicht nur die Materiallage 21 als solche eine Schwingungsamplitude zeigt, sondern darüber hinaus auch ein Schwingen oder Pulsieren der Poren 30 der Materiallage erfolgt.

Eine auf der der Ofenatmosphäre zugewandten Frontseite 29 (**Fig. 2**) der Materiallage 21 abgelagerte staubhaltige Schicht wird demnach aufgrund der Schwingungen der Materiallage 21 abgeschüttelt. Gleichzeitig verhindert die Materiallage 21, dass sich auf der Schutzplatte 20 eine Belagsschicht ausbildet.

## Patentansprüche

1. Radarantenneneinrichtung (16) mit einer in einem Gehäuse (17) aufgenommenen Antennenanordnung (19), die zur Abtrennung gegenüber einer in einem Ofenraum ausgebildeten Ofenatmosphäre mit einer am Gehäuse angeordneten radartransparenten Schutzplatte (20) versehen ist,
**dadurch gekennzeichnet,**
**dass** der Schutzplatte (20) mit Abstand eine mit Poren (30) versehene radartransparente biegeschlaffe Materiallage (21) als Abschirmung vorgeordnet ist, derart, dass ein gegenüber dem Ofenraum durch die Materiallage (21) abgetrennter Zwischenraum (23) gebildet ist, in den eine Fluidleitung (24) zur Beaufschlagung der Materiallage (21) mit einer Fluidströmung (26) einmündet.

2. Radarantenneneinrichtung nach Anspruch 1,
**dadurch gekennzeichnet,**
**dass** die Materiallage (21) elastisch ausgebildet ist.

3. Radarantenneneinrichtung nach Anspruch 1 oder 2,
**dadurch gekennzeichnet,**
**dass** die Materiallage (21) eine Gewebestruktur (33) aufweist.

4. Radarantenneneinrichtung nach Anspruch 3,
**dadurch gekennzeichnet,**
**dass** die Gewebestruktur (33) zumindest anteilig elastische Längsfäden (27) oder Querfäden(28) aufweist.

5. Radarantenneneinrichtung nach Anspruch 4,
**dadurch gekennzeichnet,**
**dass** die Längsfäden (27) oder Querfäden (28) eine elastische Umhüllung (29) aufweisen.

6. Radarantenneneinrichtung nach Anspruch 4,
**dadurch gekennzeichnet,**
**dass** die Längsfäden (27) oder Querfäden (28) mit einem elastischen Material imprägniert sind.

7. Radarantenneneinrichtung nach einem der vorangehenden Ansprüche,
**dadurch gekennzeichnet,**
**dass** die Fluidleitung (24) zumindest anteilig in einer Gehäusewandung (22) des Gehäuses (17) ausgebildet ist.

8. Radarantenneneinrichtung nach einem der vorangehenden Ansprüche,
**dadurch gekennzeichnet,**
**dass** die Fluidleitung (24) zumindest bereichsweise mit einer Heizeinrichtung versehen ist.

9. Verfahren zur Abschirmung einer Radarstrahlung emittierenden Radarantenneneinrichtung (16) umfassend eine in einem Gehäuse (17) angeordnete Antennenanordnung (19), die zur Abtrennung gegenüber einer in einem Ofenraum ausgebildeten Ofenatmosphäre mit einer am Gehäuse (17) angeordneten radartransparenten Schutzplatte (20) versehen ist,
**dadurch gekennzeichnet,**
**dass** der Schutzplatte (20) zur Abschirmung gegenüber der Ofenatmosphäre einer mit Poren (30) versehene radartransparente biegeschlaffe Materiallage (21) vorgeordnet ist, derart, dass zwischen der Schutzplatte (20) und der Materiallage (21) ein gegenüber dem Ofenraum abgetrennter Zwischenraum (23) gebildet wird, und die Materiallage (21) mittels einer in den Zwischenraum (23) einmündenden Fluidleitung (24) zur Erzeugung von Schwingungen der Materiallage (21) mit einer die Poren (30) der Materiallage durchdringenden Fluidströmung (26) beaufschlagt wird.

10. Verfahren nach Anspruch 9,
**dadurch gekennzeichnet,**
**dass** die Fluidströmung (26) beheizt wird.

11. Verfahren nach Anspruch 9 oder 10,
**dadurch gekennzeichnet,**
**dass** die Fluidströmung (26) als Stickstoffströmung ausgebildet ist.

12. Verfahren nach einem der Ansprüche 9 bis 11,
**dadurch gekennzeichnet,**
**dass** die Strömungsbeaufschlagung zur Ausbildung eines zeitabhängigen Beaufschlagungsprofils mit wechselndem Druck erfolgt.

13. Verfahren nach einem der Ansprüche 9 bis 12,
**dadurch gekennzeichnet,**
**dass** zur Erzeugung von Schwingungen der Materiallage eine Abstimmung der Materiallage (21) in ihrem Aufbau und/oder ihrer Elastizität auf das Beaufschlagungsprofil erfolgt.

## Claims

1. A radar antenna device (16) having an antenna arrangement (19) that is accommodated in a housing (17) and is provided with a radar-transparent protective plate (20) for being separated with respect to a furnace atmosphere formed within a furnace chamber, said protective plate (20) being disposed on the housing,
**characterized in that**
a radar-transparent limp material layer (21) comprising pores (30) is disposed as a shield at a distance upstream of the protective plate (20) in such a manner that a space (23) which is separated by the material layer (21) is formed with respect to the furnace chamber, a fluid line (24) opening into said space (23) for applying a fluid flow (26) to the material layer (21).

2. The radar antenna device according to claim 1,
**characterized in that**
the material layer (21) is formed in an elastic manner.

3. The radar antenna device according to claim 1 or 2,
**characterized in that**
the material layer (21) has a fabric structure (33).

4. The radar antenna device according to claim 3,
**characterized in that**
the fabric structure (33) has at least partially elastic longitudinal threads (27) or transverse threads (28).

5. The radar antenna device according to claim 4,
**characterized in that**
the longitudinal threads (27) or transverse threads (28) have an elastic sheath (29).

6. The radar antenna device according to claim 4,
**characterized in that**
the longitudinal threads (27) or transverse threads (28) are impregnated with an elastic material.

7. The radar antenna device according to any one of the preceding claims,
**characterized in that**
the fluid line (24) is at least partially formed within a housing wall (22) of the housing (17).

8. The radar antenna device according to any one of the preceding claims,
**characterized in that**
the fluid line (24) is provided with a heating device at least in sections.

9. A method for shielding a radar antenna device (16) which emits radar radiation and comprises an antenna arrangement (19) disposed in a housing (17), said antenna arrangement (19) being provided with a radar-transparent protective plate (20) for being separated with respect to a furnace atmosphere formed within a furnace chamber and said protective plate being disposed on the housing,
**characterized in that**
a radar-transparent limp material layer (21) comprising pores (30) is disposed upstream of the protective plate (20) for shielding from the furnace atmosphere, in such a manner that a space (23) is formed between the protective plate (20) and the material layer (21), said space (23) being separated from the furnace chamber, and that a fluid flow (26) which interfuses the pores (30) of the material layer is applied to the material layer (21) via a fluid line (24) which conducts to the space (23) for generating vibrations in the material layer(21).

10. The method according to claim 9,
**characterized in that**
the fluid flow (26) is heated.

11. The method according to claim 9 or 10,
**characterized in that**
the fluid flow (26) is formed as a nitrogen flow.

12. The method according any one of the claims 9 to 11,
**characterized in that**
the flow for forming a time-dependent application profile is applied using an alternating pressure.

13. The method according to any one of the claims 9 to 12,
**characterized in that**
the material layer (21) is coordinated with the application profile within the design of the material layer (21) and/or the elasticity of the material layer (21) in order to generate vibrations of the material layer.

## Revendications

1. Dispositif d'antenne radar (16) ayant un agencement d'antenne (19) qui est logé dans un boîtier (17) et qui est prévu d'une plaque de protection (20) pour séparer ledit agencement d'antenne (19) d'une atmosphère de four formée dans une chambre de four, ladite plaque de protection (20) étant transparente aux ondes radar et disposée sur le boîtier,
**caractérisé en ce qu'**
une molle couche de matériau (21) transparente aux ondes radar et prévue de pores (30) est disposée comme protection à une distance en amont de la plaque de protection (20) de manière qu'un espace intermédiaire (23) séparé de la chambre de four par la couche de matériau (21) est formé, une conduite de fluide (24) débouchant dans ledit espace intermédiaire (23) pour alimenter la couche de matériau (21) en un écoulement de fluide (26).

2. Dispositif d'antenne radar selon la revendication 1,
**caractérisé en ce que**
la couche de matériau (21) est élastique.

3. Dispositif d'antenne radar selon la revendication 1 ou 2,
**caractérisé en ce que**
la couche de matériau (21) a une structure de tissu (33).

4. Dispositif d'antenne radar selon la revendication 3,
**caractérisé en ce que**
la structure de tissu (33) a au moins partiellement des fils longitudinaux (27) élastiques ou des fils transversaux (28) élastiques.

5. Dispositif d'antenne radar selon la revendication 4,
**caractérisé en ce que**
les fils longitudinaux (27) ou les fils transversaux (28) ont une gaine (29) élastique.

6. Dispositif d'antenne radar selon la revendication 4,
**caractérisé en ce que**
les fils longitudinaux (27) ou les fils transversaux (28) sont imprégnés d'un matériau élastique.

7. Dispositif d'antenne radar selon l'une quelconque des revendications précédentes,
**caractérisé en ce que**
la conduite de fluide (24) est formée au moins partiellement dans une paroi de boîtier (22) du boîtier (17).

8. Dispositif d'antenne radar selon l'une quelconque des revendications précédentes,
**caractérisé en ce que**
la conduite de fluide (24) est au moins par sections prévue d'un dispositif de chauffage.

9. Procédé pour la protection d'un dispositif d'antenne radar (16) qui émet du rayonnement radar, comprenant un agencement d'antenne (19) disposé dans un boîtier (17), ledit agencement d'antenne (19) étant prévu d'une plaque de protection (20) pour séparer ledit agencement d'antenne (19) d'une atmosphère de four formée dans une chambre de four, ladite plaque de protection (20) étant transparente aux ondes radar et disposée sur le boîtier,
**caractérisé en ce que**,
pour la protection contre l'atmosphère de four, une molle couche de matériau (21) transparente aux ondes radar et prévue de pores (30) est disposée en amont de la plaque de protection (20) de manière qu'un espace intermédiaire (23) est formé entre la plaque de protection (20) et la couche de matériau (21), ledit espace intermédiaire (23) étant séparé de la chambre de four, et **en ce que** la couche de matériau (21) est alimentée en un écoulement de fluide (26) qui traverse les pores (30) de la couche de matériau via une conduite de fluide (24) qui débouche dans l'espace intermédiaire (23) pour générer des vibrations dans la couche de matériau (21).

10. Procédé selon la revendication 9,
**caractérisé en ce que**
l'écoulement de fluide (26) est chauffé.

11. Procédé selon la revendication 9 ou 10,
**caractérisé en ce que**
l'écoulement de fluide (26) est un écoulement d'azote.

12. Procédé selon l'une quelconque des revendications 9 à 11,
**caractérisé en ce que**
l'écoulement est alimenté en pression alternante pour former un profil d'alimentation en fonction du temps.

13. Procédé selon l'une quelconque des revendications 9 à 12,
**caractérisé en ce que**
la structure et/ou l'élasticité de la couche de matériau (21) sont/est adaptée/s au profil d'alimentation pour la génération des vibrations dans la couche de matériau.
